# EUROPEAN PATENT APPLICATION

(11) **EP 2 296 206 A1**
(43) Date of publication of application: **16.03.2011**
(21) Application number: 09170128.4
(22) Date of filing: 11.09.2009
(51) Int. Cl.: H01M 2/04, H01M 2/20, H01M 2/34

(54) **High voltage battery system having modular high voltage battery interface with integrated connector and fuse**

(71) Applicant: MAGNA STEYR Fahrzeugtechnik AG & Co KG, 8041 Graz (AT)
(72) Inventor: Reiss, Thomas, 8041, Graz (AT); Barkoczi, Roland, 9021, GYÖR (HU)
(74) Representative: Harringer, Thomas

(57) **Abstract**

A battery interface includes an interface housing which encloses an electrical connector for an electrically powered device and a fuse electrically connected to the electrical connector. The fuse is preselected to match the electrically powered device to which electrical power is to be supplied via the electrical connector. The interface housing is configured to be disposed on a battery housing and to be operatively connected thereto.

## Description

### BACKGROUND

Generally, in electrical systems, the connector-interface and its connector housing and the fuse with its fuse housing are located at different areas, and as a result, must be separately manufactured, shipped and assembled. The use of such a structure may lead to several undesirable occurrences. For instance, during the final assembly, both the connector and fuse must be separately installed and appropriately connected. Accordingly, the integration of the fuse is only one of a number of parts which are pre-assembled by a supplier. Moreover, for each purpose the circuit must be inspected to determine if the correct fuse is installed. Meaning, it must be determined if the fuse is built in a polarized housing to prevent mismatching during the assembly phase. Even still, it is necessary to ensure there is sufficient space to install the separate packages, which may become complicated when reduced overall spacing is required. Yet and still, maintenance becomes complicated in instance, for example, when the fuse must be replaced or maintained care must be taken to ensure that it is carried out without a plugged connection and that the change is not made an inappropriately closed circuit. Finally, use of separate housing for the fuse and the connector requires separate sealing, which increases overall manufacturing costs.

### SUMMARY

Embodiments relate to a battery system such as a high voltage (HV) battery system adapted for use in hybrid and/or fully electrical vehicles and the like.

Embodiments relate to a HV battery system that includes a compact, modular battery interface including a hermetically sealed protective housing that encloses a fuse and a connector electrically connected to the fuse.

In accordance with embodiments, a battery interface for a battery may include at least one of the following: an interface housing mounted on and/or over and operatively connected to a battery, the interface housing defining an interior space; an electrical connector provided in the interior space; and a fuse provided in the interior space adjacent and electrically connected to the electrical connector.

In accordance with embodiments, a battery interface for a battery may include at least one of the following: an interface housing defining an interior space therein and including a lid which encloses the interior space; a seal which hermetically seals the interior space; an electrical connector provided in the interior space and adapted for electrical connection to an electrical device powered by the battery; and a fuse provided in the interior space and electrically connected to the electrical connector.

In accordance with embodiments, a battery interface for a high voltage battery may include at least one of the following: an interface housing having a first interface housing section, a second interface housing section which encloses an interior space defined by the first interface housing section and the second interface housing section; a seal which hermetically seals the interior space at an interface between the first interface housing section and the second interface housing section; a fuse supported in the interior space; and an electrical connector supported in the interior space and electrically connected at a first end to the fuse and at a second end to an electrical device powered by the high voltage battery.

In accordance with embodiments, a battery interface for a battery may include at least one of the following: a connector configured to electrically connect the battery to an electrical device powered by the battery; a fuse electrically connected to the connector and matched to the electrical device; and an interface housing enclosing the connector and the fuse and configured for connection to the battery.

In accordance with embodiments, a high voltage battery system may include at least one of the following: a high voltage battery enclosed in a battery housing; and a battery interface housing which encloses a fuse and a plug electrically connected to the fuse to enable a plugged connection between the battery and a device utilizing the power available from the battery.

In accordance with embodiments, a high voltage battery system may include at least one of the following: a battery housing; a high voltage battery supported in the battery housing; a battery interface housing operatively connected to the battery housing; an electrical connector supported in the battery interface housing and adapted for electrical connection to an electrically powered device powered by the high voltage battery; and a fuse supported in the battery interface housing and electrically connected to the electrical connector.

In accordance with embodiments, a battery system may include at least one of the following: a battery housing which supports a battery therein; an interface housing mounted on and/or over the battery housing; an electrical connector supported in the interface housing; and a fuse supported in the interface housing and electrically connected to the electrical connector.

In accordance with embodiments, a battery system may include at least one of the following: a battery housing which supports a battery therein; an interface housing which interfaces with the battery housing via battery connections projecting therefrom which establish an electrical connection with poles of the battery; a multi-pole connector supported in the interface housing and electrically connected to the battery connections, the multi-pole connector being configured for electrical connection to a device to which electrical power from the battery is to be supplied; a fuse supported in the interface housing and electrically connected to the multi-pole connector; and a seal which hermetically seals the interface connector housing.

The battery system in accordance with embodiments establishes a battery connection that extends through a wall of an interface housing that houses a fuse and a connector and which is configured to establish an electrical connection between the fuse, the connector and the battery that is housed in a battery housing. In this arrangement, a single seal effectuates hermetic sealing of the interface housing from undesirable dust, moisture, debris and the like. The interface housing permits access to an interior space therein to enable routine maintenance, replacement, etc. to be performed on the fuse and/or connector.

### DRAWINGS

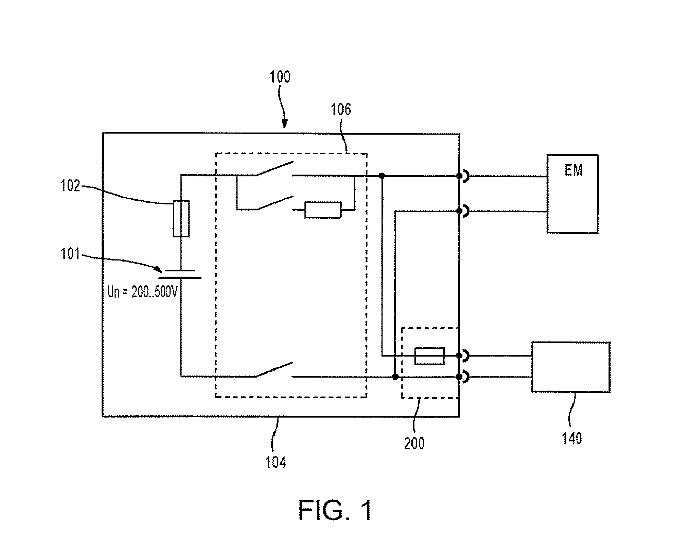

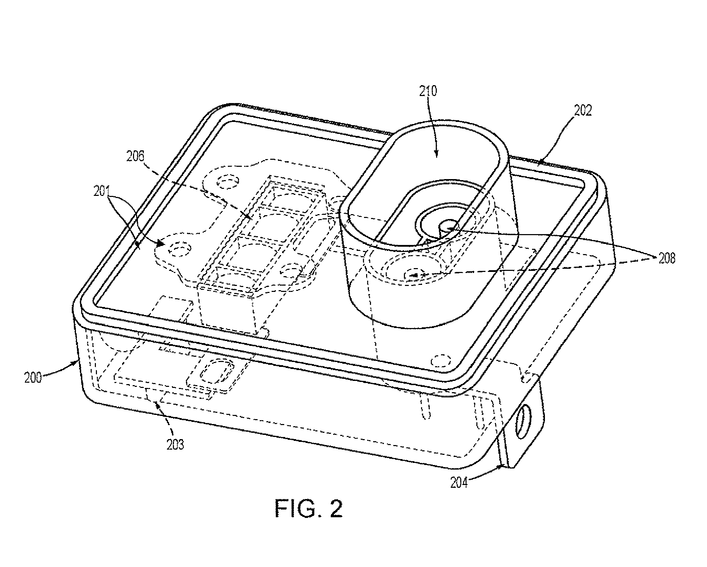

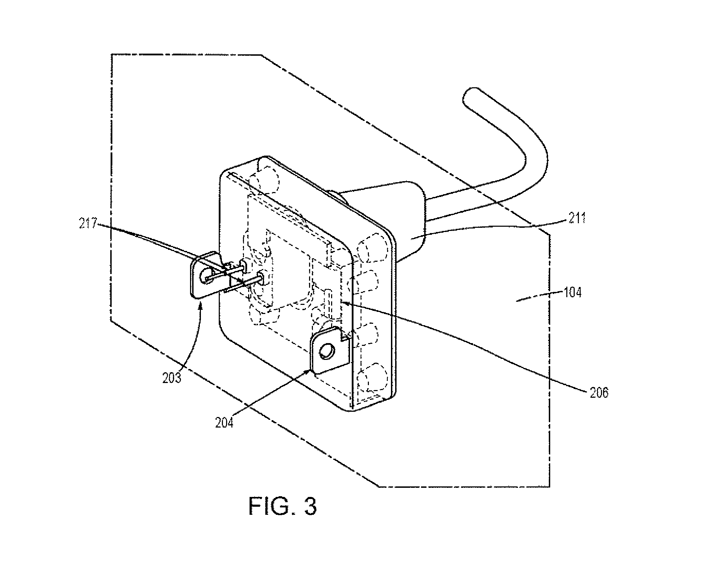

Example FIG 1 illustrates a circuit diagram of a high voltage battery system, in accordance with embodiments.
Example FIGS. 2 and 3 illustrate a modular fuse/connector arrangement for a high voltage battery system, in accordance with embodiments.

### DESCRIPTION

Example FIG. 1 illustrates a schematic circuit diagram of a high voltage (HV) battery system 100 in accordance with embodiments which is adapted for use in hybrid and/or fully electrical vehicles and the like. HV battery system 100 includes high voltage (HV) battery 101 and contactors 106 housed or otherwise supported within battery housing 104. Battery housing 104 is provided with a set of main contacts which are configured in this case to provide an electrical connection with electrical motor EM. Electrical device 140 is electrically connected to HV battery 101 via battery interface 200. Electrical device 140 may be any electrical component for a vehicle. Such devices may be used, for example, for power steering, air conditioning, windshield wipers, headlights, or the like. Main fuse 102 is housed in battery housing 104 and is electrically connected in series with HV battery 101 which, for example, can be capable of outputting a range of between 200-500V

As illustrated in example FIGS. 2 and 3, battery interface 200 includes protective housing 210 which encloses or otherwise supports fuse 206 and electrical connector 208 in an interior space therein.

Housing 210 for battery interface 200 may be operatively connected to battery housing 104 via battery connections 203, 204 which extend from housing 210 of battery interface 200. Battery connections 203, 204 may having arms extending therefrom which provide that are respectively connected to fuse 206 and at least one of the pins of electrical connector 208. The second of the pins of electrical connector 208 may be serially connected to fuse 206.

The portion of the interior space of interface housing 200 that supports fuse 206 may be enclosed by lid 201. In accordance with embodiments, housing 200 may be provided with one or more apertures permitting plug 211 of electrical device 140 to be inserted therethrough to establish an electrical connection between electrical device 140 and multi-pole electrical connector 208. Lid 201 may be arranged in a manner such that plug 211 must be disconnected from multi-pole electrical connector 208 before lid 201 can be removed or otherwise displaced from interface housing 200. This, as will be appreciated, ensures that an unplugged connection exists before fuse 206 can be accessed and/or removed/replaced.

Housing 210 may, alternatively or additionally, be provided with seal 202 to hermetically seal the interior space thereof. Seal 202 may be a single gasket or the like-type seal and may be disposed about the periphery at an interface between lid 201 and interface housing 210. Seal 202 may provide an IP6K9K-type seal, and therefore, render the interior space of housing 200 impervious to undesirable, dust, debris, moisture and the like. As is well known the IP6K9K term is such as to denote 6K = dustproof and 9K = resistant to high-pressure/steam cleaning. As will be understood, embodiments are not limited to this particular level and may differ as the case demands.

Fuse 206, by way of example, can have a nominal voltage of about 800V and a nominal current in a range between 15-50A. Electrical connector 208 may have a structure that includes a connector body having at a front side thereof a male/female connector component 208a and on an opposite rear side thereof interlock contacts 217 arranged for connection with circuitry associated with battery 101. In accordance with embodiments, electrical connector 206 may be a multi-pole connector having at least two male/female connector components.

As illustrated in example FIG. 3, battery interface 200 may be mounted or otherwise positioned on and/or over battery housing 104. In such a case, battery-side connectors 203, 204 are electrically connected to battery 101 to provide an operative connection therebetween.

Accordingly, the integration of a fuse and a connector in a modular housing structure results in the need to preassemble only one part by a supplier. Moreover, since the fuse is provided in a polarized housing, mismatching of the fuse during assembly of the battery can be prevented. The disclosed embodiment also reduces the number of sites which must be provided, and thus, reduces the demand for space on the exterior of the battery housing. Moreover, the mechanical connection between the plug of the electrical device and connector must be removed prior to removal of the lid for the interface housing. This provides safety to the design since it obviates an attempt to change the fuse while the electrical device with which the fuse is associated is still plugged into the battery housing 104. Inasmuch as one seal/gasket is provided to seal the fuse and connector in the interface housing, the simplicity of production and maintenance is enhanced and the number of minor parts that need to be inventoried can be reduced.

Accordingly, embodiments provide a fuse and a connector supported in the same housing. Use of a single housing obviates the need for separate housing for the fuse and connector, which in turn, reduces overall package space requirements and manufacturing costs. Such a structure also obviates a mismatch of the fuse with the device which is to be connected to the connector. It also reduces the number of seals to one and is such that the connection between the device and the connector must be disconnected before the lid can be removed and the fuse accessed and replaced. Battery connections which extend through a wall of the interface housing are configured to provide an electrical connection between a fuse, a connector and a battery which is housed in the battery housing. The connector in this instance may include a multi-pole connector which is electrically connected to the fuse and a pair of interlock contacts which are operatively connected to the multi-pole connector.

Although embodiments have been described herein, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A battery interface for a battery comprising:
an interface housing defining an interior space therein;
an electrical connector supported in the interior space; and
a fuse supported in the interior space and electrically connected to the electrical connector.

2. A battery interface of claim 1, wherein the electrical connector is adapted for electrical connection to an electrical device powered by the battery.

3. A battery interface of claim 2, wherein the fuse is preselected to correspond to the electrical device.

4. A battery interface of claim 1, wherein the interface housing has a lid hermetically sealing the interior space of the interface housing.

5. A battery interface of claim 1, further comprising battery connections which extend through a wall of the interface housing and which are configured to provide an electrical connection between the fuse, the electrical connector and the battery.

6. A battery interface of claim 1, wherein the electrical connector comprises a multi-pole connector.

7. A battery interface of claim 1, further comprising interlock contacts operatively connected to the electrical connector.

8. A battery system comprising:
a battery housing;
a battery supported in the battery housing;
a battery interface housing operatively connected to the battery housing;
an electrical connector supported in the battery interface housing and adapted for electrical connection to an electrically powered device powered by the battery; and
a fuse supported in the battery interface housing and electrically connected to the electrical connector.

9. The battery system of claim 8, wherein the battery comprises a high voltage battery.

10. A battery system of claim 7, further comprising battery connections extending from the battery interface housing and which provide an electrical connection between the fuse, the electrical connector and the battery.

11. The battery system of claim 7, further comprising interlock contacts operatively connected to the electrical connector.

12. The battery system of claim 7, further comprising a seal which hermetically seals an interior space within the battery interface housing.

13. A battery system of claim 7, wherein the electrical connector comprises a multi-pole connector.

14. A battery interface for a battery comprising:
an interface housing having a base and a lid corresponding to the base which encloses an interior space defined by the base and the lid;
a seal hermetically sealing the interior space at an interface between the base and the lid;
a fuse at the interior space of the interface housing; and
a connector at the interior space of the interface housing and electrically connected to the fuse.

15. The battery interface of claim 14, wherein the battery comprises a high voltage battery.

16. A battery interface of claim 14, wherein the connector comprises a multi-pole connector.

17. A battery interface of claim 14, further comprising battery connections which provide an electrical connection between the fuse, the connector and the battery.

18. The battery interface of claim 17, wherein the battery connections extend from the interface housing.

19. The battery interface of claim 14, further comprising interlock contacts operatively connected to the connector.

20. The battery interface of claim 14, wherein the fuse is preselected to correspond to a device powered by the battery.
